# NEUE EUROPÄISCHE PATENTSCHRIFT

(11) **EP 2 260 047 B2**
(45) Veröffentlichungstag und Bekanntmachung des Hinweises auf die Entscheidung über den Einspruch: **20.07.2016**
(45) Hinweis auf die Patenterteilung: 21.08.2013
(21) Anmeldenummer: 09730836.5
(22) Anmeldetag: 08.04.2009
(51) Int. Cl.: B01J 31/24, B01J 31/00, C07F 15/00, B01J 31/22

(54) **VERFAHREN ZUR HERSTELLUNG VON RUTHENIUM-CARBEN-KOMPLEXEN**
METHOD FOR MANUFACTURING RUTHENIUM CARBENE COMPLEXES
PROCÉDÉ DE PRODUCTION DE COMPLEXES RUTHÉNIUM-CARBÈNE

(30) Priorität: 08.04.2008 DE 102008001054
(43) Veröffentlichungstag der Anmeldung: 15.12.2010
(73) Patentinhaber: Evonik Degussa GmbH, 45128 Essen (DE)
(72) Erfinder: KADYROV, Renat, 60389 Frankfurt (DE); ROSIAK, Anna, 30625 Hannover (DE)
(86) Internationale Anmeldenummer: PCT/EP2009/054248
(87) Internationale Veröffentlichungsnummer: WO 2009/124977

(56) Entgegenhaltungen:
- EP-B1- 1 087 838
- WO-A-2005/016522
- DE-A1- 19 854 869
- NGUYEN, SONBINH THEBAO: "The designs, synthesis, and applications of well-defined, single component group VIII olefin metathesis catalysts" 30. Oktober 1995 (1995-10-30), CALIFORNIA INSTITUTE OF TECHNOLOGY , PASADENA , XP002533041 Gefunden im Internet: URL:http://resolver.caltech.edu/caltechETD :etd-09282005-160712> Seite 34; Verbindung 11
- FÜRSTNER A ET AL: "Indenylidene complexes of ruthenium: optimized synthesis, structure elucidation, and performance as catalysts for olefin metathesis- application to the synthesis of the ADE-ring system of nakadomarin A" CHEMISTRY - A EUROPEAN JOURNAL, WILEY - V C H VERLAG GMBH & CO. KGAA, WEINHEIM, DE, Bd. 7, Nr. 22, 1. Januar 2001 (2001-01-01), Seiten 4811-4820, XP002996987 ISSN: 0947-6539
- KARSTEN J. HARLOW, ANTHONY F. HILL AND JAMES D. E. T. WILTON-ELY: "The first co-ordinatively unsaturated Group 8 allenylidene complexes: insights into Grubbs vs. Dixneuf?Fürstner olefin metathesis catalysts" J. CHEM. SOC., DALTON TRANS, Nr. 3, 1999, Seiten 285-291, XP002533040 in der Anmeldung erwähnt
- DE FREMONT ET AL: "Ruthenium-indenylidene complexes in ring opening metathesis polymerization (ROMP) reactions", JOURNAL OF MOLECULAR CATALYSIS A: CHEMICAL, ELSEVIER, AMSTERDAM, NL, vol. 283, no. 1-2, 14 December 2007 (2007-12-14), pages 108-113, XP022512936, ISSN: 1381-1169
- BLECHERT S ET AL: "Synthese und Anwendung eines permanent immobilisierten Olefinmetathese-Katalysators", ANGEWANDTE CHEMIE, WILEY - V C H VERLAG GMBH & CO. KGAA, DE, vol. 112, no. 21, 1 January 2000 (2000-01-01), pages 4062-4065, XP002300269, ISSN: 0044-8249, DOI: 10.1002/1521-3757(20001103)112:21<4062::AI D-ANGE4062>3.0.CO;2-O
- MARCIA BETH FRANCE:: "Olefin Metathesis with Group VIII Transition Metal Complexes: Mechanism, Reactivity, and Catalyst Development (Thesis)", 1995, CALIFORNIA INSTITUTE OF TECHNOLOGY, PASADENA pages 1-201, * page 119 - page 121 *
- M. SCHOLL ET AL.: 'Synthesis and Activity of a New Generation of Ruthenium-Based Olefin Metathesis Catalysts Coordinated with 1,3-Dimesityl-4,5-dihydroimidazol-2-ylidene Ligands§' ORGANIC LETTERS Bd. 1, Nr. 6, 1999, Seiten 953 - 956
- R. KADYRON ET AL.: 'Olefin metathesis ruthenium catalysts with unsaturated NHC' CHIMICO OGGI/CHEMISTRY TODAY Bd. 27, Nr. 3, 2009, Seiten 24 - 26
- R. KADYROV: 'Low Catalyst Loading in Ring-Closing Metathesis Reactions' CHEMISTRY EUROPA JOURNAL Bd. 19, 2013, Seiten 1002 - 1012
- T.M. TRNKA ET AL.: 'The Development of L²X²Ru=CHR Olefin Metathesis Catalysts: An Organometallic Success Story' ACCOUNTS OF CHEMICAL RESEARCH Bd. 34, Nr. 1, 2001, Seiten 18 - 29

## Beschreibung

Die vorliegende Erfindung betrifft ein Verfahren zur Herstellung von Carbenrutheniumkomplexen sowie auf Basis dieses Verfahrens herstellbare Arylalkyliden-Ruthenium-Komplexe, die beispielsweise als Katalysatoren in Metathesereaktionen eingesetzt werden können.

In den letzten Jahren wurden vermehrtAnstrengungen unternommen, thermisch sowie Wasser und Luft stabile Homogenkatalysatoren für die Olefinmetathese herzustellen. Besonderes Interesse haben dabei spezielle Ruthenium-Alkylidenverbindungen gefunden.
Carbenrutheniumkomplexe sind äußerst wirkungsvolle Katalysatoren für die Olefinmetathese. Ihren einzigartigen Eigenschaften, z.B. der hohe Toleranz gegenüber Wasser, Luft und polaren funktionellen Gruppen, ist es zu verdanken, dass sie in immer stärkerem Maße in der organischen Synthese verwendet werden. Der immens gestiegene Bedarf und die vielfältigen Anwendungsmöglichkeiten für diese Katalysatoren haben zwangsläufig zur Suche nach alternativen Synthesewegen geführt.
Die Rutheniummetallcarbenkomplexe für die Olefinmetathesepolymerisation der allgemeine Struktur RuX₂(=CH-CH=CR₂)L₂ sind zum Beispiel in den Patentanmeldungen WO 93/20111 beschrieben. Als Liganden L kommen Triphenylphosphan und substituiertes Triphenylphosphan zum Einsatz. Die Herstellung erfolgt durch Umsetzung von RuCl₂(PPh₃)₃ mit geeigneten disubstituierten Cyclopropenen als Carben-Vorläufer.

Die Cyclopropene sind jedoch thermisch instabil und nicht kommerziell erhältlich. Sie müssen deshalb kurz vor der Synthese in einem aufwendigen Verfahren hergestellt werden.

Ähnliche Umsetzungen mit [Ru(p-Cymen)Cl]₂ sind in WO 96/04289 beschrieben.

In der WO 97/06185 sind ebenfalls Metathesekatalysatoren beschrieben, die auf Rutheniummetallcarbenkomplexen beruhen. Sie können durch Umsetzung von RuCl₂(PPh₃)₃ mit Diazoalkanen hergestellt werden.

Der Umgang mit Diazoalkanen stellt jedoch, insbesondere bei der Durchführung des Verfahrens in technischem Maßstab, ein Sicherheitsrisiko dar.

Hill et al. Dalton 1999, 285-291 beschreiben die Synthese von Ru-Indenyliden-Komplexen, ausgehend von RuCl₂(PPh₃)₃ und Diphenylpropargylalkohol.

Hoffmann et al. Journal of Organometallic Chemistry 641 (2002) 220-226 beschreiben die Synthese von Ru-Alyliden-Komplexen, ausgehend von dem Wilkinson Hydrid-Komplex RuHCl (PPh₃)₃.

Für beide Verfahren muss das eingesetzte metallorganische Startmaterial der Formel RuCl₂(PPh₃)₃ unter Einsatz eines großen Überschusses an Triphenylphosphan (PPh₃) aus RuCl₃ hergestellt werden. Bei der Katalysatorsynthese selbst gehen jedoch nach dem Ligandenaustausch nochmals PPh₃-Liganden verloren.

Von Grünwald et al. [Grünwald, C., Gevert, O., Wolf, J.., Gonzälez-Herrero, P., Werner, H., Organometallics 15 (1996), 1969-1962] wird ein Verfahren zur Herstellung von Rutheniumkomplexen beschrieben, bei dem polymeres [RuCl₂(COD)]ₙ, in i-Propanol in Gegenwart von Phosphan mit Wasserstoff umgesetzt wird.

Nachteilig ist, dass bei diesem Verfahren lange Reaktionszeiten und ein zweifacher Überschuss an Phosphan erforderlich sind.

Nach einer im Patent EP0839821 beschriebenen Methode verläuft die Umsetzung ohne Wasserstoff, und es wird weniger Phosphan gebraucht. Jedoch bilden sich bei dieser Reaktionsführung oft Vinyliden-Komplexe, wie es z.B. von Ozawa [H. Katayama, F. Ozawa Organometallics 17 (1998), 5190-6] beschrieben wird.

In WO 9821214 werden Synthesen der Carbenkomplexe beschrieben, die von dem Ruthenium-Polyhydrid RuHCl(H₂)x(PCy₃)₂ ausgehen, wobei unter PCy₃ Tricyclohexylphosphan zu verstehen ist.

Der Ruthenium Polyhydrid-Komplex istjedoch schwer zugänglich. Zudem sind lange Reakionszeiten erforderlich.

Die bekannten Synthesewege zur Herstellung von Metathesekatalysatoren des Typs RuX₂(=CH-R)(PR'3)₂ sind aus den genannten Gründen unwirtschaftlich. Das Patent DE19854869 beschreibt eine Eintopfsynthese der Carbenrutheniumkomplexe RuX₂ (=CH-CH₂R) (PCy₃)₂ aus RuCl₃, Mg, PCy₃, Wasserstoff und Acetylen.

Der Umgang mit Acetylen stellt jedoch, besonders bei der Durchführung des Verfahrens in technischem Maßstab, ein Sicherheitsrisiko dar.

Die Aufgabe der Erfindung ist die Bereitstellung eines Verfahrens zur Herstellung von Ruthenium-Carbenkomplexen, das in der technischen Anwendung stabil und unter ökonomischen wie ökologischen Gesichtspunkten gesehen den bekannten Herstellverfahren des Standes der Technik überlegen ist.

Die Dissertation von S.T. Nguyen (California Institute of Technology, Pasadena, 30.10.1995) behandelt die Synthese von Gruppe VIII Olefinmetathesekatalysatoren. Es werden der Ruthenium-Komplex (1) (S. 17, Formel 5) und seine Derivate (6)-(9) (S. 28) offenbart. Nguyen offenbart ferner die acyclische Metathese von 1,1-Dimethyl-1,3-butadien und Vinylferrocen in Gegenwart des Rutheniumkomplexes (1) und seiner Derivate (S. 34, Z. 1-5). Bei einer weiteren acyclischen Metathese wird durch die Umsetzung der Verbindung CH₂=CHER mit dem Derivat (8) (= 1-TFA2) gemäß Formel 11 (S. 34) 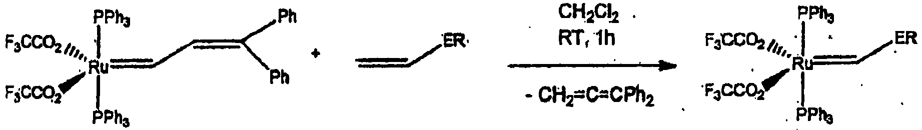 (mitte E = O, R = Et oder COMe; E = S, R = CH₂Ph; E = NR', NRR' = Carbazol, Pyrolidinon, Imidazol) ein Komplex erhalten, der mit der allgemeinen Formel X₂L₂Ru=CH-Ar beschrieben werden kann, wobei zwei Triphenylphosphingruppen als Ligand L und zwei Trifluoroacetatgruppen als X gewählt werden und unter anderem Carbazol, Pyrolidinon oder Imidazol als Ar gewählt werden.

A. Fürstneret al. (Chem. Eur. J. 2001, 22(7), 4811-4820) beschreibt Indenylidenkomplexe des Rutheniums als Katalysatoren in der Olefinmetathese. Auf Seite 4811 werden Ruthenium-Komplexe offenbart, die mit der allgemeinen Formel X2LL'Ru=CH-Ar beschrieben werden können, wobei die konkrete Verbindung 2 die folgenden Merkmale aufweist: X= Cl, L = PCy₃, L'=1,3-Dimesitylimidazol-2-yliden, Ar= Ph. Dieser Komplex kann durch Austausch des PCy₃-Liganden durch den NHC-Liganden aus Verbindung 1b (Seite 4812) erhalten werden (S. 4811, Z. 8-10). Fürstner et al. offenbart weiterhin einen

Ruthenium-Komplex der allgemeinen Formel X₂L₂Ru=CH-Ar, wobei die konkrete Verbindung 3b (S. 4812, Schema 2) die folgenden Merkmale aufweist: X = Cl, L = PCy₃, Ar = Phenylindenyliden. Fürstner offenbart ferner Ringschlussmetathesereaktionen (RCM) in Gegenwart der Verbindung 3b (Tabelle 1, S.. 4813; Tabelle 2, S. 4814).

Diese Aufgabe wird gelöst durch ein Verfahren zur Herstellung von Rutheniumkomplexen der allgemeinen Formel

Ru X₂ (=CH-CH₂R)L₂ (I),

wobei
X ein anionscher ligand ist,
R Wasserstoff oder ein (C₁-C₁₈) - Alkylrest, (C₃-C₈)-Cycloalkyl-, (C₂-C₇)-Heterocycloalkyl-, (C₆-C₁₄)-Aryl-oder (C₃-C₄) - Heteroarylrest ist, und
L ein neutraler Elektronendonor-Ligand ist, dadurch gekennzeichnet, dass man
   A) ein Ru-Metallsalz der allgemeinen Formel:

      RuXₓN_{y} (II),

      wobei
      x ganze Zahlen größer oder gleich 2 ist und X die oben angegebenen Bedeutung hat,
      y ganzen Zahlen größer oder gleich 0 entsprechen, und bei y >= 1 ist,
      N gleiche oder verschiedene koordinierende Neutralliganden bedeutet;
      mit L in Anwesenheit einer Base und Reduktionsmitteln umsetzt und
   B) anschließend mit einem Silylalkin der allgemeinen Formel III

      R-C≡CSiR'₃ (III),

      wobei
      R die oben angegebenen Bedeutung hat,
      R' gleich oder verschieden wählbare Reste ausder Gruppe Wasserstoff, (C₁-C₈)-Alkyl, (C₁-C₈)-Alkoxy, (C₆-C₁₀)-Aryloxy, (C₆-C₁₀)-Aryl bedeuten, umsetzt.

In einer bevorzugten Ausführungsform sind die beiden anionischen Liganden X gleich und die beiden neutralen Elektronendonor-Liganden L sind ebenfalls gleich.

Bevorzugt ist R Wasserstoff oder ein substituierter (C₁-C₁₂)-Alkylrest oder ein substituierter (C₆-C₁₀)-Arylrest.

Besonders bevorzugt ist R Wasserstoff.

Die erfindungsgemäße Aufgabe wird ebenfalls gelöst durch ein Verfahren zur Herstellung von Rutheniumkomplexen der allgemeinen Formel

RuX₂(=CR¹R²)L₂,

worin
X und L die in Anspruch 1 angegebene Bedeutungen haben und R¹ für Wasserstoff oder einen (C₁-C₁₀)-Alkylrest, (C₃-C₈)-Cycloalkyl-, (C₂-C₇)-Heterocycloalkyl, (C₆-C₁₄)-Arylrest oder (C₃-C₁₄)-Heteroarylrest und R² für einen (C₆-C₁₄)-Arylrest oder (C₃-C₁₄)-Heteroarylrest stehen, gegebenenfalls die Reste R¹ und R² einen 5-7 gliedrigen Zyklus aufweisen können, dadurch gekennzeichnet, dass man.
A) ein Ru-Metallsalz der allgemeinen Formel:

   RuXₓN_{y} (II),

   worin
   X, N und die ganzen Zahlen x und y die in Anspruch 1 angegebene Bedeutungen haben;
   mit L in Anwesenheit einer Base und Reduktionsmitteln umsetzt und
B) anschließend mit einem Silylalkin der allgemeinen Formel III

   R-C≡CSiR'₃ (III),

   worin
   R und R' die in Anspruch 1 angegebenen Bedeutungen haben, umsetzt und
C) anschließend mit einem Alken der allgemeinen Formel IV

   H₂C=CR¹R² (IV),

   worin
   R¹ und R² die oben angegebenen Bedeutung haben, umsetzt.

Bevorzugt ist R¹ Wasserstoff und R² ein substituierter (C₆-C₁₀)-Arylrest oder ein substituierter (C₃-C₁₀)- Heteroarylrest

Der neutrale Elektronendonor-Ligand L kann aus der Gruppe der Phosphane, Phosphinite, Phosphonite oder Phosphite ausgewählt sein.

Vorteilhafterweise kann der Ligand L aus der Gruppe Triphenylphosphan, Triisopropylphosphan, Tricyclohexylphosphan und 9-Cyclohexyl-9-phosphabicyclo-[3.3.1]-nonan ausgewählt sein.

Der Ligand L₂ kann aus der Gruppe der bidentaten Liganden der allgemeinen Formel 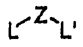 worin,
L und L' gleich oder verschieden ausgewählt aus der Gruppe -PR¹R², -P(OR¹) (OR²), -NR¹R² oder heterocyclisches Carben sind, und Z eine Brücke ist, welche die beide Gruppen kovalent verbindet., ausgewählt werden.

Die Reduktion des Ru-Metallsalzes der allgemeinen Formel RuXₓN_{y} kann mit Wasserstoff in Gegenwart eines metallischen Reduktionsmittels durchführt werden, wenn x=3 und y=0 beträgt. Für diesen Fall kann beispielsweise Magnesium als Reduktionsmittel eingsetzt werden.

Als Base kann ein Überschuss an basischem Ligand eingesetzt werden.

Die Umsetzung B) kann in Gegenwart von Wasser durchgeführt werden.

Die Reduktion von Ru-Metallsalzen der allgemeinen Formel RuXₓN_{y} kann mit Alkohol oder dem Ameisensäure-Triethylamin-Komplex durchführt werden, wenn x>=2 und y>0 ist.. Für diesen Fall wird als Reduktionsmittel bevorzugt sekundärer Alkohol eingesetzt.

Als Base kann ein Amin eingesetzt werden.

Als Base können weiterhin Triethylamin oder 1,8-Diazobicyclo[5.4.0]undec-7-en eingesetzt werden.

X kann ein einwertiger oder X₂ ein einzelner zweiwertiger anionischer Ligand bedeuten, beispielsweise Halogen, Pseudohalogen, Carboxylat, Sulfat oder Diketonat. Bevorzugt ist X ein Halogen, insbesondere Brom oder Chlor, speziell Chlor.

Ru X₂ (=CH-CH₂ R)L₂ (I)

in der X ein anionischer Ligand ist, R Wasserstoff oder ein gegebenenfalls substituierter (C₁C₁₈)-Alkylrest oder (C₃-C₈)-Cycloalkyl - oder (C₂-C₇)-Heterocycloalkyl-, (C₆-C₁₄)- Aryl- oder (C₃-C₁₄)-Heteroarylrest ist, und L neutrale

Elektronendonor-Liganden sind, werden in dem erfindungsgemäßen Verfahren hergestellt, indem man zuerst ein Metallsalz der Formel II:

RuXₓN_{y} (II),

worin X die oben angegebenen Bedeutung hat, x ganzen Zahlen größer oder gleich 2 und y ganzen Zahlen größer oder gleich 0 entsprechen, bei y >= 1 N gleiche oder verschiedene koordinierende Neutralliganden bedeuten,;
in Anwesenheit einer Base und eines Reduktionsmittels und gegebenenfalls in Gegenwart von Wasserstoff mit L umsetzt (Umsetzung A) und anschließend ohne Isolierung von Zwischenstufen in Anwesenheit einer Säure mit einem Silylalkin der allgemeinen Formel III

R-C≡CSiR'₃ (III),

in der R die oben angegebene Bedeutung hat und R' gleich oderverschieden wählbare Reste aus derGruppe Wasserstoff, (C₁-C₈)-Alkyl, (C₁-C₈)-Alkoxy, (C₆-C₁₀)-Aryloxy, (C₆-C₁₀)-Aryl bedeuten, umsetzt (Umsetzung B).

Als Reduktionsmittel kann jedes Reduktionsmittel eingesetzt werden, bevorzugt sind Wasserstoff, Ameisensäure, Alkohole und metallische Reduktionsmitteln. Besonders bevorzugt sind Wasserstoff, sekundäre Alkohole und Erdalkalimetalle.

Die Reduktion von RuX3 (Formel II; x = 3, y = 0) kann vorzugsweise mit Wasserstoff in Gegenwart eines metallischen Reduktionsmittels, bevorzugt in Gegenwart eines Alkalimetalls, Erdalkalimetalls oder Übergangsmetalls, wie Zink, das in metallischer Form vorliegt, durchgeführt werden.

Die Erdalkalimetalle, vorzugsweise Magnesium, werden vorzugsweise in einer aktivierten Form eingesetzt. Dabei kann die Aktivierung beispielsweise durch Kontaktieren mit Chlor- oder Bromalkan durchgeführt werden.

Beispielsweise kann in einer Eintopfreaktion unter Inertgasatmosphäre Magnesium in einem verdünnten chlorhaltigen organischen Lösungsmittel, beispielsweise Dichlorethan, vorgelegt und nach einer Aktivierungsreaktion vorzugsweise von einer Minute bis einer Stunde mit dem Lösungsmittel, RuX3 und dem Ligand L unter einer Wasserstoffatmosphäre umgesetzt werden.

Bei dieser Ausführung kann die Rolle der Base durch Überschuss an basischen Ligand L übernommen werden.

Dabei beträgt das molare Verhältnis von Ligand L zu eingesetztem Rutheniumsalz vorzugsweise 3 bis 10 : 1, besonders bevorzugt 3 bis 5 : 1.

Zunächst erfolgt die Umsetzung von RuX3 oder deren Hydrat mit dem Ligand L in einem inerten Lösungsmittel in Gegenwart eines Reduktionsmittels und von Wasserstoff.

Dabei kann die Temperatur in diesem Umsetzungsschritt 0 bis 100°C, bevorzugt 40 bis 80°C betragen.

Der Druck kann dabei bevorzugt 0,01 bis 100 bar, besonders bevorzugt 0,01 bis 5 bar, insbesondere 0,01 bis 1 bar betragen.

Als Lösungsmittel können beispielsweise Aromaten, Heteroaromaten, cyclische oder acyclische Ether eingesetzt werden.

Bevorzugte Lösungsmittel können Toluol, N-Methyl-2-pyrolidon (NMP), Tetrahydrofuran, Dialkylether, Glykolether und Dioxan. Besonders bevorzugt ist Tetrahydrofuran sein.

Die Reduktion von RuXₓN_{y} (Formel II; x >= 2, y >= 1) kann vorzugsweise mit einem Alkohol, bevorzugt sekundären oder tertiären Alkohol, wie Isopropanol oder tert-Butylalkohol, oder mit Ameisensäure oder deren Derivat, wie Ameisensäure-Triethylamin-Komplex, durchgeführt werden.

Das erfindungsgemäße Verfahren wird vorteilhafterweise so durchgeführt, dass ein Metallsalz (RuXₓN_{y}) der Formel II, eine Base und ein Ligand und gegebenenfalls ein Reduktionsmittel, bevorzugt Ameisensäure, in einem Alkohol und/oder inerten Lösungsmittel suspendiert werden.

Als Basen können dabei jede anorganische und organische Base, bevorzugt Stickstoffbase, oder basischer Ligand L eingesetzt werden.

Dabei beträgt die Temperatur in diesem Schritt bevorzugt 0 bis 150°C, besonders bevorzugt 20 bis 100°C, insbesondere 40 bis 80°C.

Anschließend wird bei der Umsetzung B das Reaktionsgemisch bei einer Temperatur bevorzugt im Bereich von -80 bis 60 °C, besonders bevorzugt -30 bis 20°C, mit einem Silylalkin der allgemeinen Formel (II) umgesetzt. Dabei kann das molare Verhältnis von ursprünglich eingesetztem Rutheniumsalz zu Silylalkin vorzugsweise 1 : 1 bis 1 : 4 betragen.

Die Umsetzung erfolgt vorzugsweise in Gegenwart einer Säure.

Als Säuren können Brönsted-Säuren, wie Mineralsäuren, oder Wasser eingesetzt werden. In letzten Fall wird die Säure aus dem Wasser und Salz "in situ" generiert.

Es ist vorteilhaft die anschließende Umsetzung (C) mit Verbindungen der allgemeinen Formel:

H₂C=CR¹R² (IV)

durchzuführen, in der R¹ für Wasserstoff oder ein, gegebenenfalls substituierter (C₁-C₁₈)-Alkylrest oder (C₃-C₈)-Cycloalkyl-, (C₂-C₇)-Heterocycloalkyl-, (C₆-C₁₄)-Arylrest oder (C₃-C₁₄)-Heteroarylrest ist, und R² für ein (C₆-C₁₄)-Arylrest oder (C₃-C₁₄)-Heteroarylrest steht, und gegebenenfalls die Reste R¹ und R² einen 5-7 gliedrigen Zyklus aufweisen können; um die stabileren Ru-Arylalkylidenkomplexe der allgemeinen Formel:

RuX₂(=CR¹R²)L₂ (V),

worin X, L, R¹ und R² die oben angegebenen Bedeutungen haben, ohne Isolierung von Ruthenium-alkylidenkomplexen (I) zu erhalten.

Das erfindungsgemässe Verfahren kann vorteilhafterweise so durchgeführt werden, dass zugleich nach der Umsetzung B mit Silylalkin zu der erhaltenen Lösung ein Alken (V) hinzugefügt wird, wobei es vorteilhaft ist, die Reaktionstemperatur für diesen Schritt im Bereich von -50 °C bis 40°C, bevorzugt -20 °C bis 30 °C und besonders bevorzugt von -10°C bis 20 °C zu halten..

Die Umsetzung kann bevorzugt in einem Zeitraum von 10 Minuten bis 48 Stunden, besonders bevorzugt 30 Minuten bis 10 Stunden erfolgen.

Das Molverhältnis von Alken (IV) zum ursprünglich eingesetzten Rutheniumsalz kann bevorzugt 1 bis 20 : 1, besonders bevorzugt 2 bis 10 : 1 betragen.

Die durch das erfindungsgemässe Verfahren hergestellten. Verbindungen eignen sich außerordentlich gut als Katalysatoren bei der Polymerisation von cyclischen Olefinen, bei der Kreuzmetathese von verschiedenen Olefinen sowie bei der ringschließenden Metathese (ring closing metathesis RCM) von Dienen.

Für das erfindungsgemässe Verfahren kann es vorteilhaft sein, die Liganden L₂ als chelatisierende bidentate Liganden einzusetzen. Beispiele hierfür sind Diphosphane und Diphosphite.

Bei dem chelatisierenden Liganden L₂ kann es weiterhin vorteilhaft sein einen bidentaten Liganden ein mit unterschiedlichen koordinierenden Gruppen L-Z-L'einzusetzen. Beispiele hierfür sind Aminophosphane (VII), Phosphan-Phosphite (VIII) und Carben-Phosphane (IX) : 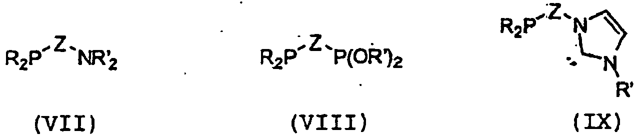 worin Z eine Brücke, welche die beiden koordinierenden Gruppen L und L' kovalent verbindet, bedeutet.

Im Rahmen der vorliegenden Erfindung ist jede Base (Protonenakzeptor) und jede Säure (Protonendonor) geeignet. Bevorzugte Basen sind solche, die eine stärkere Basizität als Wasser aufweisen. Beispiele sind Stickstoffbasen, Metallhydroxide, Metallalkoholate und - phenolate. Bevorzugte Basen sind Pyridin, Triethylamin, 1,8-Diazabicyclo[5.4.0] undec-7-en, KOH, NaOH, KO-t-Butyl und NaO-Methyl, insbesondere Triethylamin und 1,8-Diazabicyclo[5.4.0]undec-7-en (DBU).

Bevorzugte Säuren sind Brönsted-Säuren, besonders bevorzugt sind Halogenwasserstoffsäuren. Beispiele sind ausgewählt aus der Gruppe, bestehend aus HF, HCl, HBr und H1, besonders bevorzugt sind HCl und HBr.

Unter einem Neutralliganden N wird ein (C₂-C₁₂)-Alken, (C₃-C₁₂)-Cycloalken, (C₆-C₁₄)-Aren, (C₃-C₁₂)-Heteroaren, ein Ether, ein Phosphan, ein Phosphit, ein Amin, ein Imin, ein Nitril, ein Isonitril, ein Dialkylsulfoxid oder Wasser verstanden.

Beispiele für Cycloalken sind Cyclopenten, Cyclohexen, Cyclohepten, Cycloocten, Cyclododecen, Cyclohexadien, Cycloheptadien und die Isomeren von Cyclooctadien und Cyclooctatetraen, Bicycio[2.2,1]hepta-2,5-dien.

Bei den Arenen und Heteroarenen handelt es sich beispielsweise um Benzol, p-Cymen., Biphenyl, Naphthalin, Anthracen, Acenaphthen, Fluoren, Phenanthren, Furan, Thiophen, Cumaron, Thionaphthen, Dibenzofuran, Dibenzothiophen, Chromen, oder Thlanthren.

Bei den Stickstoffbasen handelt es sich beispielweise um Amine, Stickstoffaromaten oder Guanidine..

Beispiele für Amine sind Ammoniak, Triethylamin, N,N-Dimethylanilin, Piperidin, N-Methylpyrrolidin, 1,4-Diazabicyclo[2.2.2]octan oder 1,8-Diazobicyclo[5..4.0]undec-7-en.

Bei den Stickstoffaromaten handelt es sich beispielweise um Pyridin, Pyrimidin, Pyrazin, Pyrrol, Indol, Carbazol, Imidazol, Pyrazol, Benzimidazol, Oxazol, Thiazol, Isoxazol, Isothiazol, Chinolin, Isochinolin, Acridin, Phenazin, Phenoxazin, Phenothiazin oder Triazin.

Beispiele für Guanidine sind 1,1,3,3-Tetramethylguanidin und 1,3-Dimethylimidazolidin-2-imin.

Imine ist eine Gruppe chemischer Verbindungen, bei denen das Sauerstoff-Atom eines Aldehyds oder Ketons durch ein Stickstoff-Atom ersetzt ist. Das Stickstoff-Atom trägt zudem noch ein Wasserstoff oder einen anderen organischen Rest

Beispiele für Nitrile sind Acetonitril und Benzonitril. Beispiele für Isonitrile sind n-Butylisonitril, Cyclohexylisonitril und Benzylisonitril.

Beispiele für Ether sind Dibutylether, Tetrahydrofuran, Dioxan, Ethylenglykolmonomethyloder -dimethylether, Ethylenglykolmonoethyl- oder -diethylether, Diethylenglykoldiethylether und

Triethylenglykoldimethylether.

Beispiele für Dialkylsulfoxid sind Dimethylsulfoxid, Tetra-und Pentamethylensulfoxid.

Bei den Phosphanen handelt es sich im Rahmen der vorliegenden Erfindung um Verbindungen der Formel PR¹R²R³,
in der R¹, R² und R³ gleich oder verschieden, ausgewähltaus der Gruppe Wasserstoff, (C₁-C₁₈)-Alkyl, (C₃-C₈)-Cycloalkyl, (C₂-C₇)-Heterocycloalkyl, (C₆-C₁₄)-Aryl oder (C₃-C₁₄)-Heteroaryl, sein können, wobei gegebenenfalls die Reste R¹, R² und R³ ein oder mehrere zyklische Strukturen aufweisen können.

Bei den Phosphiniten handelt es sich im Rahmen der vorliegenden Erfindung um Verbindungen der Formel PR¹R²R³,
in der R¹, R² gleich oder verschieden, ausgewählt aus der Gruppe (C₁-C₁₈)-Alkyl, (C₃-C₈)-Cycloalkyl, (C₂-C₇)-Heterocycloalkyl, (C₆-C1₄)-Aryl oder (C₃-C₁₄) -Heteroaryl, und R³ ausgewählt aus der Gruppe -OH, (C₁-C₈)-Alkoxy, (C₆-C₁₄)-Aryloxy, sein können, wobei gegebenenfalls die Reste R¹, R² und R³ ein oder mehrere zyklische Strukturen aufweisen können.

Bei den Phosphoniten handelt es sich im Rahmen der vorliegenden Erfindung um Verbindungen der Formel PR¹R²R³,
in der R¹, R² gleich oder verschieden ausgewählt aus der Gruppe (C₁-C₈)-Alkoxy, (C₆-C₁₄)-Aryloxy, und R³ ausgewählt aus der Gruppe (C₁-C₁₈)-Alkyl, (C₃-C₃)-Cycloalkyl, (C₂-C₇)-Heterocycloalkyl, (C₆-C₁₄)-Aryl oder (C₃-C₁₄)-Heteroaryl sein können, wobei gegebenenfalls die Reste R¹, R² und R³ ein oder mehrere zyklische Strukturen aufweisen können.

Bei den Phosphiten handelt es sich im Rahmen der vorliegenden Erfindung um Verbindungen der Formel PR¹R²R³,
in der R¹, R² und R³ gleich oder verschieden, ausgewählt aus der Gruppe -OH, (C₁-C₉)-Alkoxy, (C₆-C₁₄)-Aryloxy sein können, wobei gegebenenfalls die Reste R¹, R² und R³ ein oder mehrere zyklische Strukturen aufweisen können.

Als (C₁-C₁₈)-Alkylreste sind anzusehen Methyl, Ethyl, n-Propyl, Isopropyl, n-Butyl, Isobutyl, sec-Butyl, tert-Butyl, Pentyl, Hexyl, Heptyl, Octyl, Nonanyl, Decanyl, Dodecanyl, oder Octadecanyl samt aller ihrer Bindungsisomeren.

Der Rest (C₁-C₁₈)-Alkoxy entspricht dem Rest (C₁C₁₈)-Alkyl mit der Maßgabe, daß dieser über ein Sauerstoffatom an das Molekül gebunden ist.

Unter (C₃-C₈)-Cycloalkyl versteht man Cyclopropyl, Cyclobutyl, Cyclopentyl, Cyclohexyl beziehungsweise Cycloheptylreste etc.. Diese können mit einem oder mehreren Halogenen und/oder N-, O-, P-, S-, Si-atomhaltigen Resten substituiert sein und/oder N-, O-, P-, S-Atome im Ring aufweisen, wie z. B. 1-, 2-, 3-, 4-Piperidyl, 1-, 2-, 3-Pyrrolidinyl, 2-, 3-Tetrahydrofuryl, 2-, 3-, 4-morpholinyl.

Unter einem (C₆-C₁₄)-Arylrest wird ein aromatischer Rest mit 6 bis 14 C-Atomen verstanden. Insbesondere zählen hierzu Verbindungen, wie Phenyl-, Naphthyl-, Anthryl-, Phenanthryl-, Biphenylreste oder an das betreffende Molekül annelierte Systeme der vorbeschriebenen Art, wie z.B. Indenylsysteme, welche gegebenenfalls mit Halogen, (C₁C₈)-Alkyl, (C₁-C₈)-Alkoxy, NH₂, -NO, -NO₂, NH(C₁-C₈)-Alkyl, - N((C₁C₈)-Alkyl)₂, -OH, -CF₃, -CₙF₂ₙ₊₁, NH (C₁-C₈)-Acyl, N((C₁-C₈)-Acyl)₂, (C₁-C₈)-Acyl, (C₁-C₈)-Acyioxy, -S(O)₂((C₁-C₈)-Alkoxy),- S(O)((C₁-C₈)-Alkoxy), -P(O) ((C₁-C₈)-Alkoxy) 2 oder-OP(O) ((C₁-C₈)-Alkoxy)₂ substituiert sein können.

Ein (C₃-C₁₄)-Heteroarylrest bezeichnet im Rahmen der Erfindung ein fünf-, sechs- oder siebengliedriges aromatisches Ringsystem aus 3 bis 14 C-Atomen, welches Heteroatome, wie z..B. Stickstoff, Sauerstoff oder Schwefel im Ring aufweist. Als solche Heteroaromaten werden insbesondere Reste angesehen, wie 1-, 2-, 3-Furyl, wie 1-, 2-, 3-Pyrrolyl, 1-, 2-, 3-Thienyl, 2-, 3-, 4-Pyridyl, 2-, 3-, 4-, 5-, 6-, 7-Indolyl, 3-, 4-, 5-Pyrazolyl, 2-, 4-, 5-Imidazolyl, Acridinyl, Chinolinyl, Phenanthridinyl, 2-, 4-, 5-, 6-Pyrimidinyl. Dieser Rest kann mit den gleichen Resten substituiert sein wie der oben genannte Arylrest.

Unter einem heterocyclyschen Carben wird ein Carben allgemeine Formeln 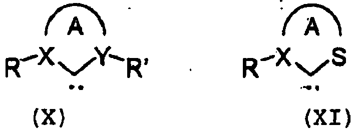 in der R und R' gleich oder verschieden ausgewählt aus der Gruppe Wasserstoff, (C₁-C₁₈)-Alkyl, (C₃-C₈)-Cycloalkyl, (C₂-C₇)-Heterocycloalkyl, (C₆-C₁₄)-Aryl oder (C₃-C₁₄)-Heteroaryl, X und Y unabhängig voneinander Stickstoff- oder Phosphoratom und A Teil einer C₂-C₄-Brücke (gesättigte oder ungesättigte, gegebenenfalls substituierte, wobei Brücken-Kohlenstoffatome durch Heteroatome substituiert seien können) seien können, verstanden.

Als Halogene kommen Fluor, Chlor, Brom und lod in Frage.

Die in dieser Schrift genannten Literaturstellen gelten als in der Offenbarung enthalten.

In der Gruppe CₙF₂ₙ₊₁ bedeutet n eine ganze Zahl von 2 bis 5.

Organosilylgruppen sind R'R"R"'Si-Reste, bei denen R', R" und R'" unabhängig voneinander ausgewählt aus der Gruppe Wasserstoff, (C₁-C₈)-Alkyl, (C₆-C₁₈)-Aryl, (C₁-C₈)-Alkoxy, (C₆-C₁₈)-Aryloxy bedeuten können.

Die erfindungsgemässen Verfahren hatden Vorteil, dass die angestrebten Ruthenium-Alkylidenkomplexe unter Verwendung von leicht zugänglichen Ru-Salzen und eines Silylalkins und gegebenenfalls eines Alkens synthetisiert werden können.

Das Verfahren kann bei normalem Druck und in technischen Lösungsmitteln durchgeführt werden. Außerdem werden keine thermisch instabilen Cyclopropen- oder Diazoalkan-Verbindungen verwendet.

Im Vergleich zu der in DE19854869 beschriebenen bekannten Methode wird weniger Phosphin gebraucht.

Außerdem wird das in DE19854869 verwendete Acetylen durch das weniger gefährliche und besser dosierbare Trimethylsilylacetylen ersetzt. Zudem ist die Ausbeute insgesamt höher.

Im Vergleich zu der in EP0839821 beschriebenen bekannten Methode wird im allgemeinen keine beziehungsweise geringe Vinyliden-Komplex-Bildung beobachtet. Die letztgenannten Komplexe lassen sich nur schwer von den angestrebten Alkylidenkomplexen trennen und tauschen nicht die Carben-Einheit unter milden Reaktionsbedingungen. Folglich sind sie sehr träge Metathese-Katalysatoren. Die Rutheniumkomplexe enthalten bei diesem Verfahren keine Heteroatome an dem Carbenkohlenstoffatom.

### Beispiel 1

### Synthese des Ethyliden-Komplexes Cl2[P(C6H11)3]2Ru=CH-CH3 (1):

a) Eine Suspension von 2.7 g Mg in 100 ml THF wurde mit 2.8 ml 1,2-Dichlorethan versetzt.. Nach Beenden der heftigen Reaktion wurden 2.43 g von Rutheniumchlorid-Hydrat und 8.4 g von Tricyclohexylphosphan zugegeben, nach 10 min Rühren wurde das Schutzgas durch Wasserstoff mit 0,01 bar Überdruck ersetzt und die Reaktionsmischung wurde im geschlossenen Kolben 4 h auf 60°C erhitzt. Die resultierende orange Suspension wurde auf -40°C gekühlt und nach der Zugabe von 1.4 ml von Trimethylsilylacetylen innerhalb 30 min auf 5 °C erwärmt. Anschließend wurden 0.6 ml Wasser zugegeben und noch 30 min bei 0°C nachgerührt Zur Entfernung von überschüssigem Magnesium wurde filtriert und Filtrat bei 0°C im Vakuum eingeengt. Der Rückstand wurde mit kaltem MeOH verrührt. Das resultierende violette Pulver wurde mit kaltem Methanol gewaschen und im Vakuum getrocknet. Ausbeute 7.23 g (95%).
   NMR in CDCI3 *δ*³¹P 35.8; ¹H *δ* 19.30 (q, *J =* 5.6, 1H), 2.60 (d, *J* = 5.5, 3H), 2.60-2.52 (m, 6H), 1.88-1.22 (m, 60H).
b) Eine braune Suspension von RuCl2(1,5-Cyclooctadien) (560 mg; 2 mmol), 0.6 ml 1,8-Diazobicyclo[5..4.0]undec-7-em (DBU) und 1.18 g Tricyclohexylphosphin in 60 ml Isopropanolwurde 2 h bei 80 °C gerührt. Zu der resultierenden ziegelroten Suspension wurde 60 ml Toluol zugegeben und die Mischung weitere 90 min bei 80°C gerührt und auf -10 °C abgekühlt. Nach der Zugabe von 0.55 ml von Trimethylsilylacetylen wurde 10 ml 2 M HCl-Lösung in Diethylether zugefügt und, anschließend, 5 min gerührt. Das Rührgemisch wurde auf 0 °C erwärmt und 45 min gerührt. Nach Einengen im Hochvakuum bei 0°C der Rückstand wurde mit kaltem MeOH verrührt. Das resultierende violette Pulver wurde mit kaltem Methanol gewaschen und im Vakuum getrocknet. Ausbeute 1.40 g (92 %).

### Beispiel 2

### Synthese des Alkyliden-Komplexes (2) :

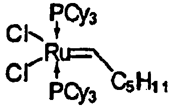

Unter Ar-Atmosphäre wurde Ru(cod)Cl₂ (660 mg, 2.35 mmol) in *i*PrOH (20 ml) suspendiert. DBU (0.75 ml) und PCy₃-Lösung (c = 20%, 0.77 M in Toluol, 7.7 ml) wurde zugegeben. Die erhaltene braune Suspension wurde 1 h bei 80°C gerührt, dann wurde Toluol (25 ml) zugegeben. Die Mischung wurde weitere 30 min bei 80°C gerührt.. Das Reaktionsgemisch wurde dann auf 0°C abgekühlt und 1-Trimethylsily-1-hexin (2.1 g) zugegeben. Nach 10 min Rühren wurde HCl-Lösung (c = 2 M in Et₂O, 2.4 ml)bei 0°C zur Reaktionsmischung gegeben. Nach 1 h Rühren wurde das Reaktionsgemisch eingeengt. Zu dem Rückstand wurde MeOH (ca.30 ml) zugegeben. Nach Filtration wurde der Komplex 2 isoliert. Das NMR zeigt auch Nebenprodukte.
NMR in CDCl₃ *δ*³¹P 35.81 ppm. ¹H *δ* 20.01 ppm.

### Beispiel 3

### Synthese des Benzyliden-Komplexes

Cl2[P(C6H11)3]2Ru=CH-C6H5 **(3) :**

Eine Suspension von 12 g Mg in 100 ml THF wurde mit 8 ml 1,2-Dichlorethan versetzt. Nach Beenden der heftigen Reaktion wurde eine Lösung von 12.2 g Rutheniumchlorid-Hydrat und 42 g Tricyclohexylphosphan in 400 ml THF zugegeben, nach 10 min Rühren wurde das Schutzgas durch Wasserstoff mit 0,01 bar Überdruck ersetzt und die Reaktionsmischung wurde im geschlossenen Kolben 5 h auf 60°C erhitzt. Die resultierende orange Suspension wurde auf -40°C gekühlt und nach der Zugabe von 9.7 ml von Trimethylsilylacetylen innerhalb 30 min auf 5 °C erwärmt. Anschließend wurden 1.8 ml Wasser zugegeben und noch 30 min bei 0°C nachgerührt. Zur resultierenden Reaktionsmischung wurden 11.5 ml Styrol zugegeben. Nach 1 Stunde rühren bei Raumtemperatur wurde filtriert und das Filtrat im Vakuum eingeengt. Der Rückstand wurde mit kaltem MeOH verrührt. Das resultierende violette Pulver wurde mit kaltem Methanol gewaschen und im Vakuum getrocknet. Ausbeute 37.44 g (91%).

### Beispiel 4

### Herstellung von Dichlorobis(tricyclohexylphosphan)(thien-2-ylmethyliden)ruthenium(II) (4)

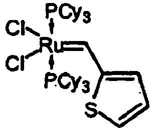

a) Unter Ar-Atmosphäre wurde Ru(cod)Cl₂ (660 mg, 2.35 mmol) in iPrOH (20 ml) suspendiert. DBU (0..75 ml, 5 mmol) und PCy₃-Lösung (c = 20%, 0.77 M in Toluol, 7..5 ml) wurden zugegeben. Die erhaltene braune Suspension wurde 1 h bei 80°C gerührt. Dann wurde THF (30 ml) zugegeben und die Mischung weitere 30 min bei 80°C gerührt. Das Reaktionsgemisch wurde dann auf 20°C abgekühlt und HCl-Lösung (c = 2 M in Et₂O, 2.4 ml) zugegeben. Nach 5 min Rühren wurde Trimethylsilylacetylen (1.4 ml, 20.4 mmol) bei ca. 22°C zur Reaktionsmischung gegeben und diese 20 min gerührt. Anschließend wurde eine Lösung von 2-Vinylthiophen (c = ca. 50% in THF, 2.4 g) zugegeben. Nach 70 min Rühren bei Raumtemperatur wurde das Reaktionsgemisch im Rotationsverdampfer eingeengt. Der Rückstand wurde in DCM (ca. 5 ml) gelöst. Nach der Zugabe von MeOH (40 ml) wurde die erhaltene Suspension unter Ar-Atmosphäre ca. 15 min gerührt.. Nach Filtration wurde der Komplex 4 (1.15 g, 1.38 mmol, 59%) als dunkelvioletter Feststoff isoliert.
   NMR in CDCl₃ *δ*³¹P 35.96 ppm; ¹H *δ* 19.11 (s, 1H), 8.20 (s, br., 1H), 7.87 (s, br., 1H), 6.97 (t, J =4.3 Hz, 1H), 2.64 (m, 6H), 1.81-1..67 (m, 33H), 1.48-1.41 (m, 12H), 1.27-1.14 (m, 21 H) ppm. IR (ATR) λ⁻¹ = 2919 (vs), 2848 (s), 2169 (w), 2051 (w), 1936 (w), 1901 (w), 1443 (m), 1403 (m), 1353 (m), 1263 (m), 1005 (m), 734 (vs) cm⁻¹. MS(ESI) m/z = 828 (21) [M⁺], 793 (9), 281 (100).
b) Zu einer Lösung von Cl_{2[}P(C₆H₁₁)₃]₂Ru=CH-CH₃ (1) (225 mg, 0.296 mmol) in Toluol (5 ml) wurde eine Lösung von 2-Vinylthiophen (c = ca. 50% in THF, 2.4 g) gegeben. Das Reaktionsgemisch wurde 2 h bei Raumtemperatur gerührt und anschließend das Lösungsmittel im Vakuum entfernt. Der Rückstand wurde in CH₂Cl₂ (ca. 1 ml) aufgenommen und mit MeOH (ca. 10 ml) gefällt. Filtrieren und waschen mit MeOH (ca. 3 ml) lieferte das Produkt **4** (170 mg, 0.21 mmol, 71%) als dunkelvioletten Feststoff.

### Beispiel 5

### Herstellung von Dichlorbis(tricyclohexylphosphan)(2-naphtmethyliden)ruthenium(II) (5)

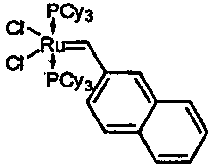

a) Unter Ar-Atmosphäre wurde Ru(cod)Cl₂ (1.32 g, 4.71 mmol) in 50 ml von Isopropanol suspendiert. DBU (1..5 ml, 10 mmol) und PCy₃-Lösung (c = 20%, 0.77 M in Toluol, 15 ml, 11.6 mmol) wurden zugegeben. Die erhaltene braune Suspension wurde 1 h bei 80°C gerührt. Zu der resultierenden ziegelrote Suspension wurde 60 ml Toluol zugegeben und die Mischung weitere 90 min bei 80°C gerührt. Das Reaktionsgemisch wurde auf 5°C abgekühlt und Trimethylsilylacetylen (2.8 ml, 20.4 mmol) zugegeben. Nach 5 min Rühren wurde 4.8 ml 2 M HCl-Lösung (9.6 mmol) in Diethylether zugefügt und 20 min gerührt. Anschließend wurde eine Lösung von 2-Vinylnaphtalin (1 g, 6.5 mmol) in Toluol (4.5 ml) zugegeben. Nach 120 min Rühren bei Raumtemperatur wurde das Reaktionsgemisch im Rotationsverdampfer eingeengt. Der Rückstand wurde in Dichlormethan aufgenommen (ca. 7 ml). Nach der Zugabe von MeOH (120 ml) wurde die erhaltene Suspension ca. 15 min gerührt und auf -78°C abgekühlt. Nach Filtration wurde Komplex 5 (1.75 g, 43%) als violetter Feststoff isoliert.
   NMR in CDCl₃ *δ*³¹P 37.43 ppm; ¹H *δ*20.12 (s, 1H), 8.82 (s, br., 1H), 8..77 (d, J = 8.5 Hz, 1H), 8.06 (d, J = 8.1 Hz, 1 H), 7.74 (d, J = 8.1 Hz, 1 H), 7.71 (d, J = 8.4 Hz, 1 H), 7.67-7.63 (m, 1 H), 7.46-7.42 (m, 1 H), 2.63 (m, 6H), 1.90-1.60 (m, 33H), 1.46-1.37 (m, 12H), 1.30-1.10 (m, 21H) ppm. IR (ATR) λ⁻¹ = 2922 (vs), 2848 (s), .2358 (w), 2003 (w), 1443 (m), 1265 (m), 1004 (m), 733 (vs) cm⁻¹.
b) Zu einer Lösung von Cl₂[P(C₆H₁₁)₃]₂Ru=CH-CH₃ (1) (340 mg, 0.45 mmol) in Toluol (5 ml) wurde eine Lösung von 2-Vinylnaphtalin (154 mg, 1 mmol) in Toluol (2 ml) bei -45°C und unter Argon-Atmosphäre gegeben. Das Reaktionsgemisch wurde 2 h bei Raumtemperatur gerührt. Anschließend wurde das Lösungsmittel im Vakuum abdestilliert. Der Rückstand wurde in CH₂Cl₂ (ca. ml) aufgenommen und mit MeOH (ca. 15 ml) gefällt. Das Produkt **5** als intensivvioletter Feststoff wurde abfiltriert und mit MeOH gewaschen (ca. 5 ml). Ausbeute 220 mg (56%).

### Beispiel 6

### Herstellung von Dichloro(2-naphthylmethyliden)[1,3-bis-(2,4,6-trimethylphenyl)-imidazol-2-yliden](tricyclohexylphosphan)ruthenium(II) (6)

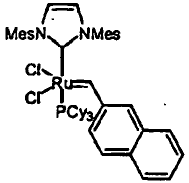

Zu einer Lösung von Komplex **5** (873 mg, 1 mmol) in Toluol (20 ml) wurde unter Argon-Atmosphäre die 1,3-bis-(2,4,6-trimethylphenyl)imidazolin-2-yliden-Lösung (1.08 mmol in 4 ml Toluol) gegeben. Das Reaktionsgemisch wurde 2 h bei Raumtemperatur gerührt und, anschließend, mit Wasser (2 x 10 ml) gewaschen. Die organische Phase wurde eingeengt. Rückstand in 1 ml CH₂Cl₂ aufgenommen, mit 10 ml MeOH verdünnt und 2 h bei-18°C gekühlt.. Nach Filtration erhielt man das Produkt **6** (300 mg, 0.33 mmol, 33%) als dunkelbraune Kristalle.
NMR in CDCl₃ *δ*³¹P 32.89 (br.) ppm; ¹H *δ* = 19.61 (s, 1H), 9.04 (s, br., 1H), 7.95 (d, J = 7.7 Hz, 1H), 7.70 (d, J = 7.8 Hz, 1H), 7.59 (t, br., J = 6.8 Hz, 1H), 7.51 (d, J = 8.8 Hz, 1H), 7.39 (t, br., J = 7.3 Hz, 1H), 7.06 (s, br., 2H), 6.97 (m, 1H), 6.94 (m, 1H), 6.69 (s, br., 1H), 5.62 (br., 1H), 2.50 (m 6H), 2.36 (s, 3H), 2.0-0.94 39H) ppm. IR (ATR)λ⁻¹ = 2923 (vs), 2849 (s), 1444 (m), 1388 (m), 1314 (m), 1262 (m), 1004 (w, br.), 843 (m), 732 (m) cm⁻¹. MS(ESI) m/z = 896 (100) [M⁺], 861 (3), 305 (43), 281 (31).

### Beispiel 7

### Herstellung von Dichloro(2-naphthylmethyliden)[1,3-bis-(2,4,6-trimethylphenyl)-4,5-dimethyl-imidazol-2-yliden](tricyclohexylphosphan)ruthenium(II) (7)

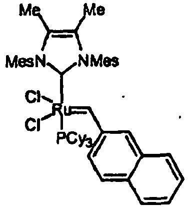

Zu einer Lösung von Komplex 5 (873 mg, 1 mmol) in getrocknetem Toluol (30 ml) wurde 4,5-Dimethyl-1,3-bis-(2,4,6-trimethylphenyl)imidazolin-2-yliden (400 mg,1.2 mmol) gegeben und 30 min bei Raumtemperatur unter Argon-Atmosphäre gerührt. Reaktionsgemisch wird im Vakuum eingeengt und mit MeOH (15 ml) verrührt. Die ausgefallenen Kristalle wurden abfiltriert und als Ausgangskomplex **5** identifiziert. Das Filtrat wurde auf die Hälfte eingeengt und im Kühlschrank kühl gelagert. Die dunkelbraun-violetten Kristalle reines Produktes **7** werden abfiltriert und im Vakuum getrocknet.
NMR in CDCl₃ *δ*³¹P 32.12 (br.) ppm; ¹H *δ* = 20.12 und 19.59 (s, 1H), 9.62 und 9.05 (br, 1H), 7.94 (d, J = 8.0 Hz, 1H), 7.69 (d, J = 8.0 Hz, 1 H), 7.59 (t, br., J = 7.0 Hz, 1 H), 7.50 (d, J = 8.2 Hz, 1 H), 7.39 (t, br., J = 7.6 Hz, 1H), 7.06 (s, br., 2H), 6.69 (s, br., 1H), 5.58 (s, br., 1H), 2.35 (s, 3H), 2.21 (m, 3H), 1.74 (s, 3H), 1.65 (s, 3H), 2.6-0.8 (m, 45H) ppm. IR (ATR)λ⁻¹ = 2921 (vs), 2847 (s), 1443 (m), 1361 (m), 1309 (m), 1259 (w), 1005 (w), 848 (m), 748 (m) cm⁻¹.

### Beispiel 8

### Herstellung von Dichlorobis(tricyclohexylphosphan)(2-furylmethyliden)ruthenium(II) (8)

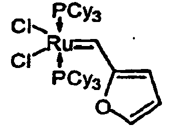

Unter Ar-Atmosphäre wurde Ru(cod)Cl₂ (5.6 g, 20 mmol) in iPrOH (200 ml) suspendiert. DBU (6.6 ml, 44 mmol) und PCy₃ (12.34 g, 44 mmol) wurden zugegeben. Die erhaltene braune Suspension wurde 1 h bei 80°C gerührt. Dann wurde THF (.100 ml) zugegeben und die Mischung weitere 30 min bei 80°C gerührt. Das Reaktionsgemisch wurde dann auf 10°C abgekühlt und HCl-Lösung (c = 2 M in Et₂O, 24 ml) zugegeben. Nach 5 min Rühren wurdeTrimethylsilylacetylen (8.3 ml, 60 mmol) zur Reaktionsmischung gegeben und diese 20 min gerührt Anschließend wurde 2-Vinylfuran (9.4 g, 100 mmol) zugegeben. Nach 3h Rühren im Eis-Bad wurde der Komplex **8** als dunkelvioletter Feststoff isoliert, mit kaltem Methanol gründlich gewaschen und im Vakuum getrocknet. Ausbeute 13.9 g (85%)
NMR in CDCl₃ *δ*³¹P 37.03 ppm; ¹H *δ* 18.79 (s, 1H), 8.12 (s, br., 1H), 7.74 (s, br., 1H), 6.43 (dd, J = 3.58 Hz, J = 1.74 1 H), 2.64 (m, 6H), 1.81-1.67 (m, 33H), 1.48-1.41 (m, 12H), 1.27-1.14 (m, 21 H) ppm

### Beispiel 9

### Herstellung von Dichloro(thien-2-ylmethyliden)[1,3-bis-(2,4,6-trimethylphenyl)-imidazol-2-yliden](tricyclohexylphosphan)ruthenium(II) (9)

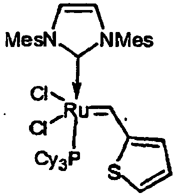

Zu einer Lösung von Komplex **4** (8.3 g, 10 mmol) in Toluol (400 ml) wurde unter Argon-Atmosphäre die 1,3-bis-(2,4,6-trimethylphenyl)imidazolin-2-yliden-Lösung (16 mmol in 52 ml Toluol) gegeben. Das Reaktionsgemisch wurde 4 h bei Raumtemperatur gerührt und, anschließend, mit Wasser (2 x 100 ml) gewaschen. Die organische Phase wurde mit 50 ml Heptan versetzt und eingeengt. Nach Filtration, Waschen mit Hexan anschließend mit Methanol und Trocknung in Vakuum isoliert man das Produkt 9 (6.14 g, 72%) als dunkelvioletten Feststoff..
NMR in CDCl₃ *δ*³¹P 31.00 (40%) und 30.65 (60%) ppm; ¹H *δ* = 18.63 und 18.52 (s, 1H), 8.65 und 7.78 (br. s, 1H), 7.45 und 6.73 (br. s, 1H), 7.04 und 7.00 (br. S, 2H), 6.98 (s, 1H), 6.97 (s, 1H), 6.83 und 6.80 (br. s, 2H), 6.10 und 6.08 (br. s, 1H), 2.51 (s, 3H), 2.34 (s, 6H), 2.27 (m, 6H), 2.08 (s, 3H), 1..96 und 1.90 (br. s, 3H), 1.60-0.85. (m, 30H) ppm

### Beispiel 10

### Herstellung von Dichloro(thien-2-ylmethyliden)[1,3-bis-(2,4,6-trimethylphenyl)-4,5-dimethyl-imidazol-2-yliden](tricyclohexylphosphan)ruthenium(II) (10)

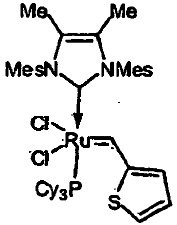

Zu einer Lösung von Komplex **4** (8.3 g, 10 mmol) in Toluol (400 ml) wurde unter Argon-Atmosphäre die 4,5-dimethyl-1,3-bis-(2,4,6-trimethylphenyl)imidazolin-2-yliden-Lösung (16 mmol in 52 ml Toluol) gegeben. Das Reaktionsgemisch wurde 4 h bei Raumtemperatur gerührt und, anschließend, mit Wasser (2 x 100 ml) gewaschen. Die organische Phase wurde mit 50 ml Heptan versetzt und eingeengt. Nach Filtration, Waschen mit Hexan, anschließend mit Methanol und Trocknung in Vakuum isoliert man das Produkt 10 (4.74 g, 54%) als dunkelvioletten Feststoff.
NMR in CDCl₃ *δ*³¹P 30.16 (37%) und 29.65 (63%) ppm; ¹H *δ* = 18.64 und 18.52 (br. s., 1H), 8.66 und 7.76 (br. s, 1H), 7.42 und 6.72 (br. s, 1H), 7.03 und 6.99 (br. S, 2H), 6.82 und 6.79 (br. s, 2H), 6.07 und 6.05 (br.. s, 1H), 2.45 (s, 3H), 2..34 (s, 3H), 2.26 (m, 9H), 2.07 (s, 3H), 1.88 und 1.83 (s, 3H), 1.74 (s, 3H), 1.71 (s, 3H), 1.60-0.85. (m, 30H) ppm.

### Beispiel 11

### Herstellung von Dichloro(thien-2-ylmethyliden)(1,3,4-triphenyl-4,5-dihydro-1H-1,2,4-triazol-5-yliden)(tricyclohexylphosphan)ruthenium(II) (11)

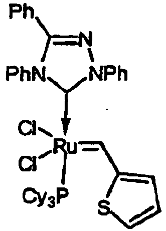

Zu einer Lösung von Komplex **4** (829 mg, 1 mmol) in getrocknetem Toluol (20 ml) wurde 1,3,4-Triphenyl-4,5-dihydro-1H-1,2,4-triazol-5-yliden (450 mg, 1.5 mmol) gegeben und über Nacht bei Raumtemperatur unter Argon-Atmosphäre gerührt. Reaktionsgemisch wurde im Vakuum eingeengt und mit Hexan (15 ml) versetzt. Der ausgefallene Feststoff wurde abfiltriert mit kaltem Hexan gründlich gewaschen und im Vakuum getrocknet. Ausbeute 662 mg (78%). NMR in CDCl₃ *δ*³¹P 26.64 (40%) und 26.03 (60%) ppm; ¹H *δ* = 18.66 (J = 5.07 Hz) und 18.47 (J = 3.0 Hz) (br. d, 1H), 8.56 und 7.85 (br. d, J = 6 Hz, 1H), 8.18 (d, J = 7.52 Hz, 1H), 7.8-7.1 (m,16H), 2.17 (br. m, 3H), 1.7-1.05 (br. m, 30H) ppm

### Beispiel 12

### Herstellung von Dichlorobis(tricyclohexylphosphan)(1-cyclohexenylmethyliden)ruthenium(II) (12)

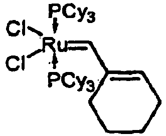

Zu einer gekühlter Lösung von 1-Vinylcyclohexen (648 mg, 6 mmol) in getrocknetem THF (5 ml) wurde Komplex 1 (761 mg, 1 mmol) gegeben und über Nacht bei 4°C unter Argon-Atmosphäre gerührt. Reaktionsgemisch wurde mit MeOH (30 ml) versetzt.. Der ausgefallene Feststoff wurde abfiltriert mit kaltem MeOH gründlich gewaschen und im Vakuum getrocknet. Ausbeute 410 mg (50%).
NMR in C₆D₆ *δ*³¹P 36.32 ppm; ¹H *δ* = 19.08 (s, 1H), 7.21 (s, 1H), 2.87 (m, 2H), 2.60 (m, 6H), 1.95-1.11 (m, 66H) ppm

### Beispiel 13

### Herstellung von Dichlorobis(tricyclohexylphosphan)(1-cyclopentylmethyliden)ruthenium(II) (13)

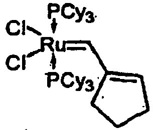

Zu einer gekühlter Lösung von 1-Vinylcyclopenten (470 mg, 5 mmol) in getrocknetem THF (5 ml) wurde Komplex 1 (761 mg, 1 mmol) gegeben und über Nacht bei 4°C unter Argon-Atmosphäre gerührt. Reaktionsgemisch wurde mit MeOH (30 ml) versetzt. Der ausgefallene Feststoff wurde abfiltriert mit kaltem MeOH gründlich gewaschen und im Vakuum getrocknet. Ausbeute 350 mg (43%).
NMR in C₆D₆ *δ*³¹P 37.26 ppm; ¹H *δ* = 19.30 (s, 1H), 6.97 (s, 1H), 3..14 (m, 2H), 2.60 (m, 6H), 1.95-1.11 (m, 64H) ppm

### Beispiel 14

### Ringschlussmetathese von N,N-Diallyl-p-toluolsulfonamid

Eine Lösung von N,N-Diallyl-p-toluolsulfonamid (0.350 mmol, 84 mg) in 17.5 ml Toluol wurde mit einem erfindungsgemäßen Ru-Carbenkomplex als Katalysator, unter Argon versetzt und bei 80°C gerührt. Dabei wurde Argon über ein Kapillar direkt in der Reaktionsmischung eingeleitet. 200 µL einer Aliquote Reaktionslösung wurden zu 500 µL von 2M Ethyl-vinyl-ether Lösung in Methylenchlorid zugegen und Mittels GC analysiert.

In Gegenwart von Komplex **4** (0.1mol%) wurde 93% Umsatz nach 15 min beobachtet.

In Gegenwart von Komplex **5** (0.1mol%) wurde 99% Umsatz nach 40 min beobachtet.

In Gegenwart von Komplex **6** (0.05mol%) würde 98°C Umsatz nach 40 min beobachtet.

### Beispiel 15

### Ringschlussmetathese von Diethyl Diallylmalonat

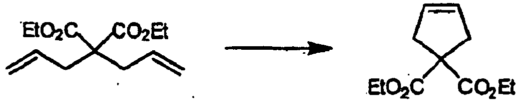

Eine Lösung von Diethyl Diallylmalonat in Dichlormethan (c = 3M) wurde mit 0.1 Mol% der Katalysator **5** unter Argon versetzt und bei 40°C gerührt. 200 µL einer Aliquote Reaktionslösung wurden zu 500 µL von 2M Ethyl-vinyl-ether Lösung in Methylenchlorid zugegen und mittels GC analysiert. In Gegenwart von Komplex **5** wurde Umsatz von 99% nach 3 h beobachtet.

### Beispiel 16

### Ringschlussmetathese von N,N-Dimethallyl-p-toluolsulfonamid

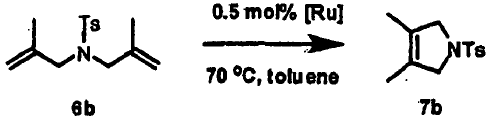

Eine Lösung von N,N-Dimethallyl-p-toluolsulfonamid (2 mmol, 559 mg) in 100 ml Toluol wurde mit dem erfindungsgemäßen Ru-Carbenkomplex als Katalysator unter Argon versetzt und bei 80°C gerührt Dabei wurde Argon über ein Kapillar direkt in der Reaktionsmischung eingeleitet. 200 µL einer Aliquote Reaktionslösung wurden zu 500 µL von 2M Ethyl-vinyl-ether Lösung in Methylenchlorid zugegen und mittels GC analysiert.

In Gegenwart von Komplex **7** (0.5mol%) wurde 70% Umsatz nach 10 min beobachtet.

## Patentansprüche

1. Verfahren zur Herstellung von Rutheniumkomplexen der allgemeinen Formel
RuX₂(=CH-CH₂R)L₂ (I),
wobei
X ein anionischer Ligand ist,
R Wasserstoff oder ein (C₁-C₁₈)-Alkylrest, (C₃-C₈)-Cycloalkyl-, (C₂-C₇)-Heterocycloalkyl-, (C₆-C₁₄)-Aryl- oder (C₃-C₁₄)-Heteroarylrest ist, und
L ein neutraler Elektronendonor-Ligand ist, **dadurch gekennzeichnet, dass** man
A) ein Ru-Metallsalz der allgemeinen Formel:
RuXₓN_{y} (II),
wobei
x ganze Zahlen größer oder gleich 2 ist und
X die oben angegebenen Bedeutung hat,
y ganzen Zahlen größer oder gleich 0 entsprechen, und bei y >= 1 ist,
N gleiche oder verschiedene koordinierende Neutralliganden bedeutet,;
mit L in Anwesenheit einer Base und Reduktionsmitteln umsetzt und
B) anschließend mit einem Silylalkin der allgemeinen Formel III
R-C≡CSiR'₃ (III),
wobei
R die oben angegebenen Bedeutung hat,
R' gleich oder verschieden wählbare Reste aus der Gruppe Wasserstoff, (C₁-C₈)-Alkyl, (C₁-C₈)-Alkoxy, (C₆-C₁₀)-Aryloxy, (C₆-C₁₀)-Aryl bedeuten, umsetzt.

2. Verfahren zur Herstellung von Rutheniumkomplexen der allgemeinen Formel
RuX₂(=CR¹R²)L₂,
worin
X und L die in Anspruch 1 angegebene Bedeutungen haben und R¹ für Wasserstoff oder einen (C₁-C₁₈)-Alkylrest, (C₃-C₈)-Cycloalkyl-, (C₂-C₇)-Heterocycloalkyl, (C₆-C₁₄)-Arylrest oder (C₃-C₁₄)-Heteroarylrest und R² für einen (C₆-C₁₄)-Arylrest oder (C₃-C₁₄)-Heteroarylrest stehen, gegebenenfalls die Reste R¹ und R² einen 5-7 gliedrigen Zyklus aufweisen können, **dadurch gekennzeichnet, dass** man
A) ein Ru-Metallsalz der allgemeinen Formel:
RuXₓN_{y} (II),
worin
X, N und die ganzen Zahlen x und y die in Anspruch 1 angegebene Bedeutungen haben;
mit L in Anwesenheit einer Base und Reduktionsmitteln umsetzt und
B) anschließend mit einem Silylalkin der allgemeinen Formel III
R-C≡CSiR'₃ (III),
worin R und R' die in Anspruch 1 angegebenen Bedeutungen haben, umsetzt und
C) anschließend mit einem Alken der allgemeinen Formel IV
H₂C=CR¹R² (IV),
worin R¹ und R² die oben angegebene Bedeutung haben, umsetzt.

3. Verfahren nach Anspruch 1 oder 2, **dadurch gekennzeichnet, dass** der neutrale Elektronendonor-Ligand L, ausgewählt wird aus der Gruppe Phosphane, Phosphinite, Phosphonite oder Phosphiten.

4. Verfahren nach Anspruch 3 **dadurch gekennzeichnet, dass** L, ausgewählt wird aus der Gruppe Triphenylphosphan, Triisopropylphosphan, Tricyclohexylphosphan und 9-Cyclohexyl-9-phosphabicyclo-[3.3.1]-nonan.

5. Verfahren nach Anspruch 1 oder 2, **dadurch gekennzeichnet, dass** L₂, ausgewählt wird aus der Gruppe bidentate Liganden der allgemeinen Formel 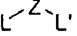 worin,
L und L' gleich oder verschieden sein können und ausgewählt werden aus der Gruppe -PR¹R², -P(OR¹)(OR²),-NR¹R² oder heterocyclisches Carben, und Z eine Brücke, welche die beiden Gruppen kovalent verbindet, bedeutet.

6. Verfahren nach einem oder mehreren der Ansprüche 1 bis 5, **dadurch gekennzeichnet, dass** x=3 und y=0 des Ru-Metallsalz der allgemeinen Formel RuXₓN_{y} beträgt und dass die Reduktion des Ru-Metallsalzes mit Wasserstoff in Gegenwart eines metallischen Reduktionsmittel durchführt wird.

7. Verfahren nach Anspruch 6 **dadurch gekennzeichnet, dass** als Reduktionsmittel Magnesium eingesetzt wird.

8. Verfahren nach einem oder mehreren der Ansprüche 1 bis 7, **dadurch gekennzeichnet, dass** als Base ein Überschuss an basischem Ligand eingesetzt wird.

9. Verfahren nach einem oder mehreren der Ansprüche 1 bis 5, **dadurch gekennzeichnet, dass** x>=2 und y>0 des Ru-Metallsalz der allgemeinen Formel RuXₓN_{y} beträgt und dass die Reduktion des Ru-Metallsalzes mit Alkohol oder dem Ameisensäure-Triethylamin-Komplex durchführt wird.

10. Verfahren nach Anspruch 9, **dadurch gekennzeichnet, dass** als Reduktionsmittel ein sekundärer Alkohol eingesetzt wird.

11. Verfahren nach einem oder mehreren der Ansprüche 1 bis 10 **dadurch gekennzeichnet, dass** als Base ein Amin eingesetzt wird.

12. Verfahren nach Anspruch 11 **dadurch gekennzeichnet, dass** als Base Triethylamin oder 1,8-Diazobicyclo[5.4.0]undec-7-en eingesetzt wird.

## Claims

1. Process for preparing ruthenium complexes of the general formula
RuX₂ (=CH-CH₂R)L₂ (I),
where
X is an anionic ligand,
R is hydrogen or a (C₁-C₁₈)-alkyl, (C₃-C₈-) cycloalkyl, (C₂-C₇)-heterocycloalkyl, (C₆-C₁₄)-aryl or (C₃-C₁₄)-heteroaryl radical and
L is an uncharged electron donor ligand, **characterized in that**
A) an Ru metal salt of the general formula:
RuXₓN_{y} (II),
where
x is an integer greater than or equal to 2 and
X is as defined above,
y is an integer greater than or equal to 0 and y >= 1,
the ligands N are identical or different coordinating uncharged ligands;
is reacted with L in the presence of a base and reducing agents and
B) subsequently reacted with a silylalkyne of the general formula III
R-C≡CSiR'₃ (III),
where
R is as defined above,
the radicals R' are identical or different radicals which can be selected from the group consisting of hydrogen, (C₁-C₈)-alkyl, (C₁-C₈)-alkoxy, (C₆-C₁₀) -aryloxy, (C₆-C₁₀) -aryl.

2. Process for preparing ruthenium complexes of the general formula
RuX₂(=CR¹R²)L₂,
where
X and L have the meanings given in Claim 1 and
R¹ is hydrogen or a (C₁-C₁₈)-alkyl or (C₃-C₈)-cycloalkyl or (C₂-C₇) -heterocycloalkyl, (C₆-C₁₄) -aryl or (C₃-C₁₄) -heteroaryl radical and R² is a (C₆-C₁₄)-aryl or (C₃-C₁₄)-heteroaryl radical and the radicals R¹ and R² can have a 5-7-membered ring, **characterized in that**
A) an Ru metal salt of the general formula:
RuXₓN_{y} (II),
where
X, N and the integers x and y have the meanings given in Claim 1;
is reacted with L in the presence of a base and reducing agents and
B) subsequently reacted with a silylalkyne of the general formula III
R-C≡CSiR'₃ (III),
where R and R' have the meanings given in Claim 1, and
C) subsequently reacted with an alkene of the general formula IV
H₂C=CR¹R² (IV),
where R¹ and R² have the meanings given above.

3. Process according to Claim 1 or 2, **characterized in that** the uncharged electron donor ligand L is selected from the group consisting of phosphanes, phosphinites, phosphonites and phosphites.

4. Process according to Claim 3, **characterized in that** L is selected from the group consisting of triphenylphosphane, triisopropylphosphane, tricyclohexylphosphane and 9-cyclohexyl-9-phosphabicyclo[3.3.1]nonane.

5. Process according to Claim 1 or 2, **characterized in that** L₂ is selected from the group consisting of bidentate ligands of the general formula 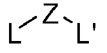 where,
L and L' can be identical or different and are selected from the group consisting of -PR¹R²,-P(OR¹)(OR²), -NR¹R² and heterocyclic carbene, and Z is a bridge which covalently links the two groups.

6. Process according to one or more of Claims 1 to 5, **characterized in that** x=3 and y=0 for the Ru metal salt of the general formula RuXₓN_{y} and that the reduction of the Ru metal salt is carried out by means of hydrogen in the presence of metallic reducing agent.

7. Process according to Claim 6, **characterized in that** magnesium is used as reducing agent.

8. Process according to one or more of Claims 1 to 7, **characterized in that** an excess of basic ligand is used as base.

9. Process according to one or more of Claims 1 to 5, **characterized in that** x>=2 and y>0 for the Ru metal salt of the general formula RuXₓN_{y} and that the reduction of the Ru metal salt is carried out by means of alcohol or the formic acid-triethylamine complex.

10. Process according to Claim 9, **characterized in that** a secondary alcohol is used as a reducing agent.

11. Process according to one or more of Claims 1 to 10, **characterized in that** an amine is used as base.

12. Process according to Claim 11, **characterized in that** triethylamine or 1,8-diazobicyclo[5.4.0]undec-7-ene is used as base.

## Revendications

1. Procédé de fabrication de complexes de ruthénium de formule générale
RuX₂(=CH-CH₂R)L₂ (I),
dans laquelle
X représente un ligand anionique,
R représente l'hydrogène ou un radical alkyle en (C₁-C₁₈), un radical cycloalkyle en (C₃-C₈), hétérocycloalkyle en (C₂-C₇), aryle en (C₆-C₁₄) ou hétéroaryle en (C₃-C₁₄), et
L représente un ligand donneur d'électrons neutre,
**caractérisé en ce que**
A) un sel métallique de Ru de formule générale :
RuXₓN_{y} (II),
dans laquelle
x représente des nombres entiers supérieurs ou égaux à 2, et
X a la signification indiquée précédemment,
y correspond à des nombres entiers supérieurs ou égaux à 0 et, lorsque y ≥ 1,
N signifie des ligands neutres coordonnants identiques ou différents ;
est mis en réaction avec L en présence d'une base et de réducteurs, puis
B) avec un silylalcyne de formule générale III
R-C≡CSiR'₃ (III),
dans laquelle
R a la signification indiquée précédemment,
R' signifient des radicaux identiques ou différents pouvant être choisis dans le groupe constitué par hydrogène, alkyle en (C₁-C₈), alcoxy en (C₁-C₈), aryloxy en (C₆-C₁₀), aryle en (C₆-C₁₀).

2. Procédé de fabrication de complexes de ruthénium de formule générale
RuX₂(=CR¹R²)L₂,
dans laquelle
X et L ont les significations indiquées dans la revendication 1, et
R¹ représente l'hydrogène ou un radical alkyle en (C₁-C₁₈), un radical cycloalkyle en (C₃-C₈), hétérocycloalkyle en (C₂-C₇), aryle en (C₆-C₁₄) ou hétéroaryle en (C₃-C₁₄), et R² représente un radical aryle en (C₆-C₁₄) ou un radical hétéroaryle en (C₃-C₁₄), les radicaux R¹ et R² pouvant éventuellement comprendre un cycle de 5 à 7 éléments, **caractérisé en ce que**
A) un sel métallique de Ru de formule générale :
RuXₓN_{y} (II),
dans laquelle
X, N et les nombres entiers x et y ont les significations indiquées dans la revendication 1,
est mis en réaction avec L en présence d'une base et de réducteurs, puis
B) avec un silylalcyne de formule générale III
R-C≡CSiR'₃ (III),
dans laquelle
R et R' ont les significations indiquées dans la revendication 1, puis
C) avec un alcène de formule générale IV
H₂C=CR¹R² (IV),
dans laquelle
R¹ et R² ont la signification indiquée précédemment.

3. Procédé selon la revendication 1 ou 2, **caractérisé en ce que** le ligand donneur d'électrons neutre L est choisi dans le groupe constitué par les phosphanes, les phosphinites, les phosphonites ou les phosphites.

4. Procédé selon la revendication 3, **caractérisé en ce que** L est choisi dans le groupe constitué par le triphénylphosphane, le triisopropylphosphane, le tricyclohexylphosphane et le 9-cyclohexyl-9-phosphabicyclo-[3.3.1]-nonane.

5. Procédé selon la revendication 1 ou 2, **caractérisé en ce que** L₂ est choisi dans le groupe des ligands bidentates de formule générale 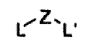 dans laquelle
L et L' peuvent être identiques ou différents et sont choisis dans le groupe constitué par -PR¹R², - P(OR¹) (O²), -NR¹R² ou un carbène hétérocyclique, et Z signifie un pont qui relie de manière covalente les deux groupes.

6. Procédé selon une ou plusieurs des revendications 1 à 5, **caractérisé en ce que** x = 3 et y = 0 dans le sel métallique de Ru de formule générale RuXₓN_{y} et **en ce que** la réduction du sel métallique de Ru est réalisée avec de l'hydrogène en présence d'un réducteur métallique.

7. Procédé selon la revendication 6, **caractérisé en ce que** du magnésium est utilisé en tant que réducteur.

8. Procédé selon une ou plusieurs des revendications 1 à 7, **caractérisé en ce qu'**un excès de ligand basique est utilisé en tant que base.

9. Procédé selon une ou plusieurs des revendications 1 à 5, **caractérisé en ce que** x ≥ 2 et y > 0 dans le sel métallique de Ru de formule générale RuXₓN_{y} et **en ce que** la réduction du sel métallique de Ru est réalisée avec un alcool ou le complexe acide formique-triéthylamine.

10. Procédé selon la revendication 9, **caractérisé en ce qu'**un alcool secondaire est utilisé en tant que réducteur.

11. Procédé selon une ou plusieurs des revendications 1 à 10, **caractérisé en ce qu'**une amine est utilisée en tant que base.

12. Procédé selon la revendication 11, **caractérisé en ce que** la triéthylamine ou le 1,8-diazobicyclo[5.4.0]undéc-7-ène est utilisé en tant que base.
